(19)

Europäisches
Patentamt
European
Patent Office
Office européen
des brevets

(11) **EP 2 621 007 A1**

(12) **EUROPEAN PATENT APPLICATION**
published in accordance with Art. 153(4) EPC

(43) Date of publication:
**31.07.2013 Bulletin 2013/31**

(21) Application number: **10857565.5**

(22) Date of filing: **17.12.2010**

(51) Int Cl.:
*H01M 4/92* (2006.01)    *B01J 23/42* (2006.01)
*H01M 4/88* (2006.01)

(86) International application number:
**PCT/JP2010/072792**

(87) International publication number:
**WO 2012/039071 (29.03.2012 Gazette 2012/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.09.2010 JP 2010214472**

(71) Applicants:
• **Cataler Corporation
Shizuoka 437-1492 (JP)**
• **TOYOTA JIDOSHA KABUSHIKI KAISHA
Aichi-ken, 471-8571 (JP)**

(72) Inventors:
• **HORIUCHI, Yousuke
Shizuoka 437-1492 (JP)**
• **TERADA, Tomoaki
Shizuoka 437-1492 (JP)**

• **NAGATA, Takahiro
Shizuoka 437-1492 (JP)**
• **HORI, Akihiro
Shizuoka 437-1492 (JP)**
• **NAGAMI, Tetsuo
Shizuoka 437-1492 (JP)**
• **KANAZAWA, Takaaki
Aichi-ken, 471-8571 (JP)**
• **KATAOKA, Mikihiro
Aichi-ken, 471-8571 (JP)**

(74) Representative: **Mai, Dörr, Besier
Patentanwälte
Steuerberater/Wirtschaftsprüfer
John-F.-Kennedy-Straße 4
65189 Wiesbaden (DE)**

(54) **SUPPORTED CATALYST FOR FUEL CELL AND PROCESS FOR PRODUCTION THEREOF, AND FUEL CELL**

(57)    An object of the present invention is to provide a supported catalyst for a fuel cell having a high activity, a method of manufacturing thereof, and a fuel cell including the supported catalyst for a fuel cell. A supported catalyst for a fuel cell of the present invention includes a conductive carrier and catalyst particle supported on the conductive carrier and contains platinum, an oxygen concentration in the catalyst particle measured by using an inert gas fusion-nondispersive infrared absorption method being reduced to 4 mass% or less.

EP 2 621 007 A1

**Description**

Technical Field

The present invention relates to a supported catalyst for a fuel cell, a method of manufacturing thereof, and a fuel cell.

Background

Fuel cells are receiving wide attention as power sources that ensure high power generation efficiency and that can be easily miniaturized, and that have less adverse impact on the environment. Particularly, solid-polymer fuel cells can operate at room temperature and have also a high power density. Accordingly, they are intensely studied as a form suitable for use in automobiles.

The solid-polymer fuel cells generate an electromotive force by a combination of the oxidation reaction of hydrogen at their anode with the reduction reaction of oxygen at their cathode. Therefore, it is necessary to efficiently accomplish the above reactions in order to improve the performance of the solid-polymer fuel cells.

From this viewpoint, an anode and/or cathode catalyst layer containing a catalyst metal, such as platinum, is used in the solid-polymer fuel cell so as to increase the efficiency of the above reactions, and thus the performance of the cell is improved. For example, JP-A No. 2002-015745 describes a solid-polymer fuel cell comprising an anode and/or cathode catalyst layer which contains a carbon carrier having platinum or a platinum alloy supported thereon. JP-A No. 2003-142112 discloses a catalyst which comprises a carbon powder carrier and catalyst particles of an alloy of platinum and iron or cobalt. If the configuration is employed, both of the durability and activity of the catalyst can be achieved at a relatively high level.

However, with the development of the fuel cell technology in recent years, there is a need for the supported catalyst for a fuel cell to be activated more.

Summary of Invention

An object of the present invention is to provide a supported catalyst for a fuel cell having a high activity, a method of manufacturing thereof, and a fuel cell comprising the supported catalyst for a fuel cell.

According to a first aspect of the present invention, there is provided a supported catalyst for fuel cell, comprising a conductive carrier; and catalyst particle supported on the conductive carrier and contains platinum, an oxygen concentration in the catalyst particle measured by using an inert gas fusion-nondispersive infrared absorption method being reduced to 4 mass% or less.

According to a second aspect of the present invention, there is provided a fuel cell comprising a cathode catalyst layer including the supported catalyst according to the first aspect.

According to a third aspect of the present invention, there is provided a method of manufacturing the supported catalyst for a fuel cell according to the first aspect, comprising mixing an acidic dispersion including a conductive carrier with a dinitrodiammine platinum nitrate solution having a platinum concentration of 1 g/L and an absorbance of 1.5 to 3 at a wavelength of 420 nm; subjecting the obtained dispersion to a reduction treatment; and subjecting a solid obtained by filtering the dispersion after the reduction treatment to heat treatment.

Brief Description of Drawings

FIG. 1 is a cross-sectional view schematically showing a fuel cell according to an embodiment of the present invention.
FIG. 2 is a graph showing an example of a relationship between the concentration of oxygen in the catalyst particles and an electro-chemical surface area (ECSA) of each single cell.
FIG. 3 is a graph showing an example of a relationship between the concentration of oxygen in the catalyst particles and the specific activity of each single cell.
FIG. 4 is a graph showing an example of a relationship between the concentration of oxygen in the catalyst particles and the mass activity of each single cell.

Description of Embodiments

Hereinafter, embodiments of the present invention will be described in detail with reference to the drawings.

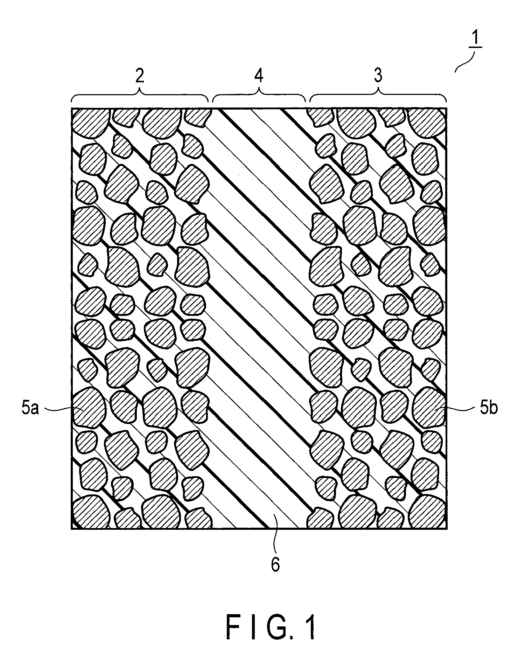

FIG. 1 is a cross-sectional view schematically showing a fuel cell according to an embodiment of the present invention. FIG. 1 shows a membrane/electrode conjugate for a solid-polymer fuel cell as an example.

The membrane/electrode conjugate 1 comprises an anode catalyst layer 2, a cathode catalyst layer 3, and a proton conductive solid electrolyte layer 4 which intervenes between the layers and contains a proton conductive solid electrolyte.

The anode catalyst layer 2 includes a supported catalyst 5a and a proton conductive solid electrolyte 6. The cathode catalyst layer 3 includes a supported catalyst 5b and the proton conductive solid electrolyte 6. The proton conductive solid electrolyte layer 4 includes the proton conductive solid electrolyte 6.

The membrane/electrode conjugate 1 produces an electromotive force between the anode catalyst layer 2 and the cathode catalyst layer 3 when gaseous hydrogen is supplied from the side of the anode catalyst layer 2 and oxygen or air is supplied to the side of the cathode catalyst layer 3. More particularly, in the anode catalyst layer 2, hydrogen molecules are oxidized by catalysis of platinum, resulting in the generation of protons and electrons. The electrons thus generated are transferred from the anode catalyst layer 2 to an external circuit through a conductive carrier (for example, a carbon carrier) as a conductive path. The protons are transferred from the anode catalyst layer 2 to the cathode catalyst layer 3 via the proton conductive solid electrolyte layer 4. The protons reaching to the cathode catalyst layer 3 react with the electrons and oxygen molecules which are supplied from the external circuit through the carbon carrier as the conductor path by the catalysis of platinum to produce water. The membrane/electrode conjugate 1 produces electrical energy from gaseous hydrogen and oxygen by exploiting such a phenomenon.

The supported catalyst 5b contained in the cathode catalyst layer 3 is produced by allowing catalyst particles which contain platinum and satisfy the conditions as will hereinafter be described to be supported on a conductive carrier.

As the conductive carrier, for example, a carbon carrier made of a carbonaceous material is used. Examples of the carbonaceous material include graphite, activated carbon, carbon black, carbon nanotubes, and combination thereof. Typically, carbon black is used as the carbonaceous material.

In the catalyst particles, the oxygen concentration measured by using an inert gas fusion-nondispersive infrared absorption method is reduced to 4 mass% or less. The oxygen concentration is preferably 4.0 mass% or less, more preferably 3.8 mass% or less. There is no particular restriction in the lower limit of the oxygen concentration.

The present inventors have found that if the concentration of oxygen in the catalyst particles is set to the above range, the catalytic activity can be greatly improved. Although the reason or mechanism is not entirely clear, the present inventors assume as follows.

When the concentration of oxygen in the catalyst particles, particularly the concentration of oxygen on the surfaces of the catalyst particles is high, the following problems may occur. That is, the absorption of oxygen to the surfaces of the catalyst particles is reduced. Further, the desorption of water from the surfaces of the catalyst particles becomes difficult to occur. Furthermore, the dispersibility of the catalyst particles in the electrolyte is worsened. Therefore, if the concentration of oxygen in the catalyst particles becomes higher, the catalytic reaction efficiency is reduced.

On the other hand, if the concentration of oxygen in the catalyst particles, particularly, the concentration of oxygen on the surfaces of the catalyst particles is decreased, a phenomenon opposite to the phenomenon occurs. That is, the absorption of oxygen to the surfaces of the catalyst particles is enhanced, the desorption of the generated water occurs easily, and the dispersibility of the catalyst particles in the electrolyte is improved. Thus, if the concentration of oxygen in the catalyst particles is decreased, the catalytic reaction efficiency can be improved.

When the concentration of oxygen in the catalyst particles exceeds 4 mass%, almost all platinum in the catalyst particles is present in the form of oxides other than PtO, for example, in the form of $PtO_2$. On the other hand, when the concentration of oxygen in the catalyst particles is 4 mass% or less, almost all platinum in the catalyst particles is present in the form of Pt or PtO. The present inventors have assumed that the difference is one of the factors why the catalytic activity is greatly improved by reducing the concentration of oxygen in the catalyst particles to 4 mass% or less.

The measurement of the oxygen concentration by the inert gas fusion-nondispersive infrared absorption method is performed as follows. As a measurement device, for example, an oxygen-nitrogen analyzer (EMGA-920, manufactured by Horiba, Ltd.) is used. Then, oxygen atoms in the particles are converted to carbon monoxide by impulse-heating and melting the catalyst particles in an inert gas. Then, the concentration of the carbon monoxide is detected using a non-dispersive infrared absorption method. The thus measured amount of oxygen in the catalyst particles is converted to the mass. Then, the oxygen concentration is obtained by dividing the obtained mass of oxygen by the mass of the measured catalyst particles.

The average particle diameter of the catalyst particles is, for example, within a range of 2 to 20 nm. This allows the performance of the supported catalyst to be further improved. The average particle diameter means the value calculated from the half-width of a peak corresponding to a Pt (111) plane in the X-ray diffraction (XRD) spectrum.

It is preferable that the catalyst particles do not substantially contain any metal other than platinum. Namely, it is preferable that the catalyst particles substantially contain only platinum as the metal. When the catalyst particles substantially contain any metal other than platinum, the concentration of oxygen in the catalyst particles may become higher because of the formation of an oxide of the metal. Therefore, in this case, the catalytic activity of the supported catalyst may be reduced.

There is no particular restriction in the supported catalyst 5a included in the anode catalyst layer 2. The supported catalyst 5a is prepared, for example, by allowing catalyst particles containing platinum or a platinum alloy to be supported on the conductive carrier.

A supported catalyst containing catalyst particles which contain platinum and in which the oxygen concentration is reduced to 4 mass% or less is produced, for example, as follows. That is, the supported catalyst is produced by, for example, the following support process and the heat treatment process.

(Support process)

First, an acidic dispersion containing a conductive carrier is prepared. As a dispersion medium, for example, water is used. The acidification treatment is performed, for example, using nitric acid. It is possible to suppress the occurrence of the precipitates when adding the platinum solution as will hereinafter be described by acidifying the dispersion.

Subsequently, the dispersion is mixed with a dinitrodiammine platinum nitrate solution having a platinum concentration of 1 g/L and an absorbance of 1.5 to 3 at a wavelength of 420 nm. Typically, the dinitrodiammine platinum nitrate solution is added to the dispersion. Thus, both of the solutions are sufficiently mixed together. The dinitrodiammine platinum nitrate solution will be described in detail later.

Thereafter, the obtained dispersion is subjected to the reduction treatment. More specifically, for example, the heat-treatment is performed in the presence of a reductant. As the reductant, for example, ethanol is used. The heating temperature and time are appropriately set according to the type of the reductant.

Subsequently, the dispersion after the reduction treatment is filtered, and washed, if necessary. Then, the obtained powder is dried.

As described above, platinum is supported on the conductive carrier.

When an alloy of platinum and another metal is supported on the conductive carrier, at least a part of the catalyst particle surface is coated with the unsolidified metal. The unsolidified metal has an affect on the catalytic activity. Therefore, it is necessary to remove the metal. Generally, a surface treatment using an acid solution is necessary in order to remove the unsolidified metal. However, if the acid treatment is performed, the concentration of oxygen in the catalyst particles is likely to increase because of the oxidation caused by the acid solution. Therefore, in this case, it is impossible or very difficult to produce catalyst particles which satisfy the above conditions of the oxygen concentration.

(Heat treatment process)

Subsequently, the powder obtained by the above support process is subjected to a heat treatment. Typically, the heat treatment is performed in an inert atmosphere such as argon. When the reduction treatment after the heat treatment as will hereinafter be described is not performed, the temperature of heat treatment is, for example, within a range of 700 to 900°C. When the reduction treatment is performed, the temperature is, for example, within a range of 700 to 950°C. The concentration of oxygen in the catalyst particles can be reduced by performing the heat treatment.

After the heat treatment, the reduction treatment is further performed, if necessary. The reduction treatment is performed, for example, using a gas including hydrogen. The temperature for the reduction treatment is, for example, within a range of 100 to 400°C. The oxygen atoms present on the surfaces of the catalyst particles (for example, oxygen atoms included in a platinum oxide) can be removed by performing the reduction treatment after the heat treatment. Accordingly, the concentration of oxygen in the catalyst particles can be further reduced by performing the treatment.

As described above, the supported catalyst is obtained.

Here, the dinitrodiammine platinum nitrate solution which is used in the support process will be described.

When the solution is diluted with pure water so that the mass of platinum per liter is 1 g, the absorbance at a wavelength of 420 nm is from 1.5 to 3. The absorbance is more preferably from 2 to 3.

The present inventors have found that the supported catalyst according to the present invention can be produced by performing the reduction treatment in the support process and by using the dinitrodiammine platinum nitrate solution.

First, the method for preparing the dinitrodiammine platinum nitrate solution will be described. The solution can be prepared by employing the following aging conditions.

(1) First, dinitrodiammine platinum crystal is dissolved in a mixed solution of nitric acid and pure water so that the mass ratio of platinum : pure nitric acid is 1 : 0.7 or less and the platinum concentration is from 50 to 200 g/L. The addition of nitric acid at a ratio more than the above mass ratio causes the progression rate of aging to be reduced. Thus, this is not preferred. It is difficult to adjust the aging in a range other than the concentration of platinum.

(2) Subsequently, the solution is boiled under normal pressure at 90 to 105°C, preferably 97 to 102°C for 5 to 100 hours. In the stage, a reaction in which the valence of platinum in the solution increases from divalent to trivalent is progressed, and the platinum solution is aged. Since the reaction efficiency is low at temperatures other than those in the range specified, reaction at out-of-range temperatures is not preferred.

Consequently, when the solution is diluted with pure water so that the mass of platinum per liter is 1 g, a platinum solution having an absorbance of 1.5 to 3 at a wavelength of 420 nm is obtained. Here, the wavelength of 420 nm is used as an indicator for determining the degree of polymerization of precious metals. It is considered that the degree of polymerization becomes higher as the absorbance at a given wavelength becomes higher, while the degree of polymerization becomes lower as the absorbance becomes lower. When the absorbance is set to the range, it is possible to improve the initial particle size distribution of platinum when the solution is supported on the carrier and improve the supporting efficiency and the catalytic activity.

The absorbance described above is a value measured by using a spectrophotometer (U-2000A, Hitachi, Ltd.). A quartz cell is used as a measuring cell. Pure water is used as a control solution.

The alkali consumption of the platinum solution is preferably from 0.15 to 0.35, more preferably from 0.15 to 0.3. This allows the platinum solution to be supported on the carrier with high efficiency even when a high concentration of platinum is contained in the platinum solution.

In this regard, the alkali consumption, which is an indicator of the concentration of acid in the platinum solution, is calculated from the equation below based on neutralization titration using 0.1 N sodium hydroxide.

[Equation 1]

$$\text{Alkali consumption (g/g. Pt)} = \frac{\text{drop amount of sodium hydroxide (g)}}{\text{amount of platinum in a sample (g)}}$$

Specifically, 5 ml of the sample in a 50-ml volumetric flask is diluted to 50 ml with pure water. Then, a 5 ml aliquot of the solution is poured into a 100-ml beaker and about 75 ml of ethanol is added thereto. The additive amount of 0.1 N sodium hydroxide, which is required for the pH of the obtained solution to reach 7, is measured using a potentiometric automatic titrator (AT-400, ATB-410; Kyoto Electronics Manufacturing Co., Ltd.). The alkali consumption is calculated from the amount and the amount of platinum in the sample, based on the above equation.

The platinum solution described above is described in detail in JP-A No. 2005-306700.

In a fuel cell 1 shown in FIG. 1, the proton conductive solid electrolyte 6 in the anode catalyst layer 2, the cathode catalyst layer 3, and the proton conductive solid electrolyte layer 4 contains, for example, water. As the proton conductive solid electrolyte 6, for example, a proton conductive solid electrolyte having an $-SO_3^-$ group may be used. As the proton conductive solid electrolyte, for example, a perfluoro sulfonic acid ionomer as typified by Nafion (registered trademark) may be used. In the membrane/electrode conjugate 1 shown in FIG. 1, the same kinds of the proton conductive solid electrolyte 6 may be used for the anode catalyst layer 2, the cathode catalyst layer 3, and the proton conductive solid electrolyte layer 4. Alternatively, different kinds of the proton conductive solid electrolytes 6 may be used. Examples

Hereinafter, examples of the present invention will be described, however the present invention is not limited thereto.

<Preparation of dinitrodiamine platinum nitrate solution>

(Preparation of solution S1)

A dinitrodiammine platinum nitrate solution S1 having a platinum concentration of 1 g/L and an absorbance of 1.5 to 3 at a wavelength of 420 nm was prepared as follows.

Nitric acid was added to 167 g of dinitrodiamine platinum crystal so that the mass ratio of platinum : nitric acid was 1 : 0.7 or less and the final consumption of alkali was 0.294. Then, pure water was added thereto so that the total amount was 1 L. The solution was heated at about 100°C for 38 hours while stirring it. Thus, solution S1 was obtained. The absorbance of solution S1 was 2.2.

(Preparation of solution S2)

Nitric acid was added to 83.3 g of dinitrodiamine platinum crystal so that the mass ratio of platinum : nitric acid was 1 : 0.7 or more and the final consumption of alkali was 1.533. Then, pure water was added thereto so that the total amount was 1 L. The solution was heated at about 95°C for 15 hours while stirring it. Thus, solution S2 was obtained. The absorbance of solution S2 was 0.8.

<Preparation of supported catalyst>

(Example 1)

First, 1.05 g of Ketchen black (manufactured by Mitsubishi Chemical Corporation) was dispersed in pure water. Subsequently, nitric acid was added to the dispersion, resulting in an acidified dispersion. Solution S1 in an amount corresponding to 0.45 g of platinum was added to the obtained acidic dispersion. Thereafter, a solution prepared by dissolving ethanol in pure water was added thereto as the reductant, which was heated. The heated dispersion was filtered to obtain a filter cake. After washing the cake, it was subjected to an air blow drying process at 80°C for 15 hours. Thus, a powder including particles containing platinum supported on Ketchen black was produced. Hereafter, the powder is referred to as "powder P1".

Then, powder P1 was subjected to a heat treatment in an argon atmosphere at 900°C for 2 hours. Subsequently, powder P1 after the heat treatment was subjected to a reduction treatment in a gas containing 2 mass% of hydrogen at 200°C for 1 hour.

As described above, the supported catalyst was prepared. Hereinafter, it is referred to as "catalyst C1".

(Example 2)

A supported catalyst was produced in the same manner as described regarding catalyst C1 except that the retention time was set to 2 hours in the reduction treatment after the heat treatment. Hereinafter, it is referred to as "catalyst C2".

(Example 3)

A supported catalyst was produced in the same manner as described regarding catalyst C1 except that the heating temperature was set to 300°C in the reduction treatment after the heat treatment.
Hereinafter, it is referred to as "catalyst C3".

(Example 4)

A supported catalyst was produced in the same manner as described regarding catalyst C1 except that the heating temperature in the heat treatment was set to 700°C and the reduction treatment after the heat treatment was eliminated. Hereinafter, it is referred to as "catalyst C4".

(Example 5)

A supported catalyst was produced in the same manner as described regarding catalyst C1 except that the heating temperature in the heat treatment was set to 850°C and the reduction treatment after the heat treatment was eliminated. Hereinafter, it is referred to as "catalyst C5".

(Example 6: Comparative example)

A supported catalyst was produced in the same manner as described regarding catalyst C1 except that the reduction treatment after the heat treatment was eliminated. Hereinafter, it is referred to as "catalyst C6".

(Example 7: Comparative example)

A supported catalyst was produced in the same manner as described regarding catalyst C1 except that the heating temperature in the heat treatment was set to 950°C and the reduction treatment after the heat treatment was eliminated. Hereinafter, it is referred to as "catalyst C7".

(Example 8: Comparative example)

A supported catalyst was produced in the same manner as described regarding catalyst C7 except that the retention time was set to 5 hours in the heat treatment. Hereinafter, it is referred to as "catalyst C8".

(Example 9: Comparative example)

A supported catalyst was produced in the same manner as described regarding catalyst C1 except that the heating temperature in the heat treatment was set to 300°C and the reduction treatment after the heat treatment was eliminated. Hereinafter, it is referred to as "catalyst C9".

(Example 10: Comparative example)

A supported catalyst was produced in the same manner as described regarding catalyst C9 except that solution S2 was used in place of solution S1. Hereinafter, it is referred to as "catalyst C10".

(Example 11)

A supported catalyst was produced in the same manner as described regarding catalyst C1 except that solution S2 was used in place of solution S1. Hereinafter, it is referred to as "catalyst C11".
Some of the production conditions for catalysts C1 to C11 are summarized in Table 1 below.

Table 1

| Examples | Platinum solution | Heat treatment | | Reduction treatment after heat treatment | | Oxygen concentration (mass%) | Average particle diameter (nm) | ECSA (m²/g) | Specific activity (A/m²) | Mass activity (A/g) |
|---|---|---|---|---|---|---|---|---|---|---|
| | | Temperature (°C) | Time (h) | Temperature (°C) | Time (h) | | | | | |
| Example 1 | S1 | 900 | 2 | 200 | 1 | 3.6 | 4.6 | 44 | 4.0 | 176 |
| Example 2 | S1 | 900 | 2 | 200 | 2 | 3.5 | 4.6 | 61 | 4.5 | 275 |
| Example 3 | S1 | 900 | 2 | 300 | 1 | 3.4 | 4.5 | 64 | 4.5 | 288 |
| Example 4 | S1 | 700 | 2 | - | - | 3.7 | 2.5 | 72 | 3.5 | 252 |
| Example 5 | S1 | 850 | 2 | - | - | 3.6 | 3.7 | 51 | 3.3 | 168 |
| Example 6 (Comparative Example) | S1 | 900 | 2 | - | - | 4.8 | 4.5 | 45 | 2.9 | 131 |
| Example 7 (Comparative Example) | S1 | 950 | 2 | - | - | 4.9 | 6.0 | 38 | 2.8 | 106 |
| Example 8 (Comparative Example) | S1 | 950 | 5 | - | - | 5.3 | 7.2 | 34 | 2.0 | 68 |
| Example 9 (Comparative Example) | S1 | 300 | 2 | - | - | 5.4 | 2.1 | 62 | 2.4 | 149 |
| Example 10 (Comparative Example) | S2 | 300 | 2 | - | - | 5.7 | 2.0 | 63 | 1.9 | 120 |
| Example 11 (Comparative Example) | S2 | 900 | 2 | 200 | 1 | 5.1 | 3.9 | 49 | 2.7 | 132 |

<Measurement of concentration of oxygen in catalyst particles>

The concentration of oxygen in the catalyst particles contained in catalysts C1 to C11 was measured. The measurement was performed as follows using an oxygen-nitrogen analyzer (EMGA-920, manufactured by Horiba, Ltd.).

First, catalyst C1 was placed in a crucible made of graphite and heated to 2500°C in a helium atmosphere, and then maintained at 2500°C for 30 seconds. Thus, catalyst C1 was melted and the oxygen contained in the catalyst particles was converted to carbon monoxide. The oxygen contained in the conductive carrier (Ketchen black) was separately removed in the elevated temperature process in the helium atmosphere.

Then, the concentration of the carbon monoxide was measured by the non-dispersive infrared absorption method. The mass of the oxygen contained in the catalyst particles was calculated from the obtained concentration of the carbon monoxide. Further, the mass of the catalyst particles contained in catalyst C1 was determined by calculating a difference between the mass of catalyst C1 and the mass of the conductive carrier (Ketchen black). The concentration of oxygen in the catalyst particles was determined by dividing the measured oxygen mass by the calculated mass of the catalyst particles. The above operation was performed on each of catalysts C2 to C11. These results are shown in Table 1 above.

As shown in Table 1, in catalysts C1 to C5, the concentration of oxygen in the catalyst particles was 4 mass% or less. On the other hand, in catalysts C6 to C11, the concentration of oxygen in the catalyst particles exceeded 4 mass%.

<Measurement of average particle diameter of catalyst particles>

The average particle diameter of the catalyst particles contained in catalysts C1 to C11 was measured. The measurement was performed as follows using an X-ray diffractometer of the (RINT-2500, manufactured by Rigaku Corporation.).

First, the powder of catalyst C1 was irradiated with X-rays, and the diffraction pattern was measured. In this case, the target was Cu and the output power was 40 kV and 40 mA. Then, the peak pattern near $2\theta = 39°$ corresponding to the surface (111) of Pt was fitted to the normal distribution. Then, the half width of the normal distribution was calculated. The average particle diameter of the catalyst particles containing platinum was calculated from the half width by a known procedure. The above operation was performed on each of catalysts C2 to C11. These results are shown in Table 1 above.

<Production of single cell>

A single cell for a solid-polymer fuel cell was produced in the following manner using catalysts C1 to C11.

First, catalyst C1 was dispersed in an organic solvent. The obtained dispersion was applied to a Teflon (registered trademark) sheet so as to obtain anode and cathode catalyst layers. Subsequently, these electrodes were pasted together through a polymer electrolyte membrane with a hot press. Further, diffusion layers were placed on both sides of the electrode to produce a single cell. Hereinafter, it is referred to as "single cell SC1".

Similarly, single cells were produced using catalysts C2 to C11, respectively. Hereinafter, the cells are referred to as "single cell SC2" to "single cell SC11", respectively.

<Electrochemical evaluation>

Electrochemical evaluation was performed on single cells SC1 to SC11. The evaluation was performed as follows under the conditions (cell temperature: 80°C, relative humidity at both electrodes: 100%) using a small single cell evaluation system (manufactured by Toyo Corporation.).

(ECSA)

The ECSA of each of the single cells was determined by the cyclic voltammetry (CV) measurement. The ESCA means an effective area of the catalyst contributing to the reaction in the electrode. When the value of the ESCA, the dispersibility of the catalyst in the electrolyte is excellent and the surface of the catalyst is effectively used.

First, the voltage was set to a range of 0.05 to 1.2 V, and the scan speed was set to 100 mV/s. The potential scanning was repeated 5 times. Then, the ESCA was measured from the charge amount of the $H_2$ adsorption region in the fifth CV by a known method. These results are shown in Table 1 above.

(Specific activity)

The specific activity of each of the single cells was determined by the current-voltage (IV) measurement. The specific activity means the oxidation reduction activity per catalyst surface area. When the value is higher, the quality of the catalyst is excellent.

First, the current was changed in a range of 0.01 to 0.1 A/cm$^2$. Then, the current value when the voltage was 0.9 V was determined. The obtained value was divided by the mass of platinum contained in each of the single cells. Subsequently, the specific activity was calculated by dividing the thus obtained current value per unit mass of platinum by the ECSA. These results are shown in Table 1 above.

(Mass activity)

The mass activity of each of the single cells was determined by calculating the product of the ESCA and the specific activity. These results are shown in Table 1 above. The mass activity means an oxidation reduction activity per catalyst mass. This shows that a higher output can be achieved as the value becomes higher.

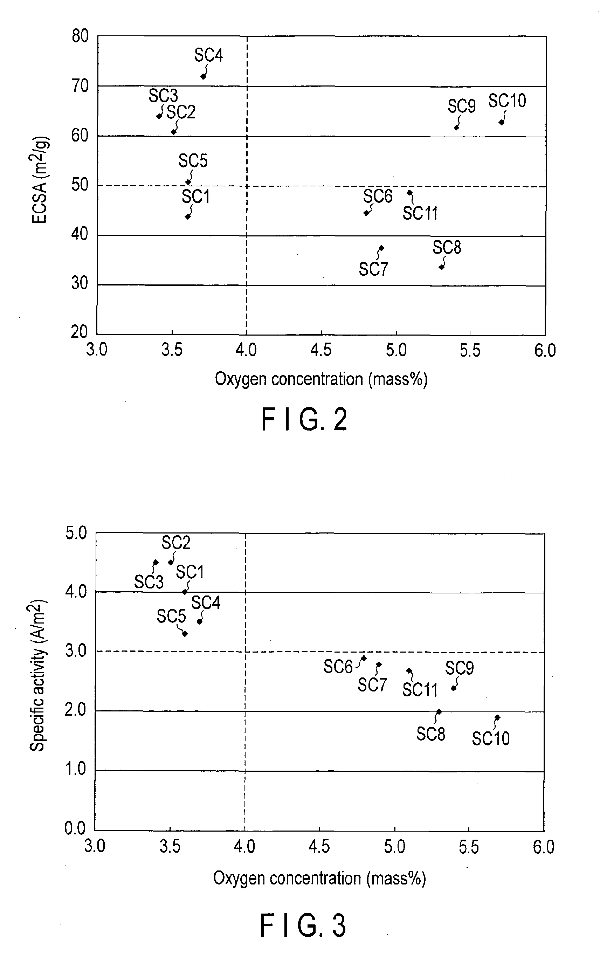

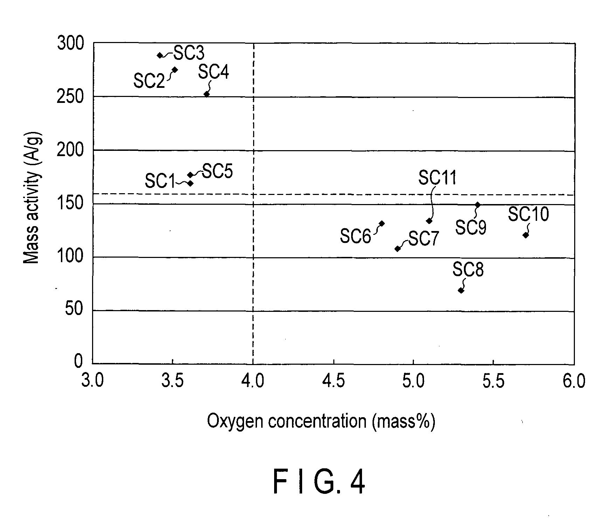

The results of electrochemical evaluation are shown in FIGS. 2 to 4. FIG. 2 is a graph showing an example of a relationship between the concentration of oxygen in catalyst particles and an ECSA of each single cell. FIG. 3 is a graph showing an example of a relationship between the concentration of oxygen in catalyst particles and the specific activity of each single cell. FIG. 4 is a graph showing an example of a relationship between the concentration of oxygen in catalyst particles and the mass activity of each single cell.

As is clear from FIG. 2, the single cells according to Examples 1 to 5 had a high ECSA. Particularly, in the single cells according to Examples 2 to 5, an ESCA of 50 m$^2$/g or more was achieved.

As is clear from FIGS. 3 and 4, the single cells according to Examples 1 to 5 had specific and mass activities higher than those of the single cells according to Examples 6 to 11. Namely, these results show that the specific and mass activities can be improved by reducing the concentration of oxygen in the catalyst particles to 4 mass% or less.

Additional advantages and modifications will readily occur to those skilled in the art. Therefore, the present invention in its broader aspects is not limited to the specific details and representative embodiments described herein. Accordingly, various modifications may be made without departing from the spirit or scope of the general invention concept as defined by the appended claims and their equivalents.

**Claims**

1. A supported catalyst for a fuel cell comprising:

   a conductive carrier; and
   catalyst particle supported on the conductive carrier and contains platinum, an oxygen concentration in the catalyst particle measured by using an inert gas fusion-nondispersive infrared absorption method being reduced to 4 mass% or less.

2. The supported catalyst for a fuel cell according to claim 1, wherein the conductive carrier is made of a carbonaceous material.

3. A fuel cell comprising a cathode catalyst layer containing the supported catalyst for a fuel cell according to claim 1 or 2.

4. A method of manufacturing the supported catalyst for a fuel cell according to any one of claims 1 to 3, comprising:

   mixing an acidic dispersion including a conductive carrier with a dinitrodiammine platinum nitrate solution having a platinum concentration of 1 g/L and an absorbance of 1.5 to 3 at a wavelength of 420 nm;
   subjecting the obtained dispersion to a reduction treatment; and
   subjecting a solid obtained by filtering the dispersion after the reduction treatment to heat treatment.

5. The method of manufacturing the supported catalyst for a fuel cell according to claim 4, wherein an additional reduction treatment is performed after the heat treatment.

F I G. 1

F I G. 2

F I G. 3

F I G. 4

| | INTERNATIONAL SEARCH REPORT | International application No. |
|---|---|---|
| | | PCT/JP2010/072792 |

A. CLASSIFICATION OF SUBJECT MATTER
*H01M4/92*(2006.01)i, *B01J23/42*(2006.01)i, *H01M4/88*(2006.01)i

According to International Patent Classification (IPC) or to both national classification and IPC

B. FIELDS SEARCHED

Minimum documentation searched (classification system followed by classification symbols)
H01M4/92, B01J23/42, H01M4/88

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2009-117253 A (Toyota Motor Corp.),<br>28 May 2009 (28.05.2009),<br>entire text<br>& WO 2009/60929 A1 | 1-3<br>4-5 |
| X<br>Y | JP 2004-127814 A (Toyota Motor Corp.),<br>22 April 2004 (22.04.2004),<br>entire text<br>& US 2004/67847 A1 | 1-3<br>4-5 |
| X<br>Y | JP 4-298238 A (Tanaka Kikinzoku Kogyo<br>Kabushiki Kaisha),<br>22 October 1992 (22.10.1992),<br>entire text<br>(Family: none) | 1-4<br>4-5 |

☒ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>14 March, 2011 (14.03.11) | Date of mailing of the international search report<br>22 March, 2011 (22.03.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2010/072792 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>Y | JP 2005-166409 A  (Nissan Motor Co., Ltd.),<br>23 June 2005 (23.06.2005),<br>entire text<br>(Family: none) | 1-4<br>4-5 |
| A | JP 2009-193956 A  (Toyota Motor Corp.),<br>27 August 2009 (27.08.2009),<br>entire text<br>& WO 2009/91025 A1 | 1-5 |
| A | JP 2010-27364 A  (Nissan Motor Co., Ltd.),<br>04 February 2010 (04.02.2010),<br>entire text<br>(Family: none) | 1-5 |

Form PCT/ISA/210 (continuation of second sheet) (July 2009)

## INTERNATIONAL SEARCH REPORT

International application No.

PCT/JP2010/072792

| **Box No. II** | **Observations where certain claims were found unsearchable (Continuation of item 2 of first sheet)** |
|---|---|

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| **Box No. III** | **Observations where unity of invention is lacking (Continuation of item 3 of first sheet)** |
|---|---|

This International Searching Authority found multiple inventions in this international application, as follows:
   See extra sheet.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| INTERNATIONAL SEARCH REPORT | International application No. |
|---|---|
| | PCT/JP2010/072792 |

Continuation of Box No.III of continuation of first sheet(2)

In order that a group of inventions set forth in claims comply with the requirement of unity, it is required that a special technical feature for so linking the group of inventions as to form a single general inventive concept is present, but, the inventions set forth in claims 1 - 5 are considered to be linked one another by only the matter set forth in claim 1. However, the above-said matter cannot be a special technical feature, since said matter is described in the prior art documents, for example, the document 1: JP 2009-117253 A (Toyota Motor Corp.), 28 May 2009 (28.05.2009) and the document 2: JP 2004-127814 A (Toyota Motor Corp.), 22 April 2004 (22.04.2004).

Consequently, there is no special technical feature for so linking the inventions as to form a single general inventive concept among a group of inventions set forth in claims 1 - 5. Therefore, it is obvious that the group of inventions set forth in claims 1 - 5 does not comply with unity of invention.

Form PCT/ISA/210 (extra sheet) (July 2009)

**EP 2 621 007 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002015745 A
- JP 2003142112 A

- JP 2005306700 A